Europäisches Patentamt

European Patent Office

Office européen des brevets

(11) Veröffentlichungsnummer: **0 468 394 A2**

# EUROPÄISCHE PATENTANMELDUNG

(21) Anmeldenummer: **91112228.1**

(51) Int. Cl.⁵: **G01S 13/82**

(22) Anmeldetag: **22.07.91**

(30) Priorität: **27.07.90 DE 4023890**
**31.01.91 DE 4102816**

(43) Veröffentlichungstag der Anmeldung:
**29.01.92 Patentblatt 92/05**

(84) Benannte Vertragsstaaten:
**DE FR GB IT**

(71) Anmelder: **DIEHL GMBH & CO.**

Stephanstrasse 49
**W-8500 Nürnberg(DE)**

(72) Erfinder: **Westphal, Robert, Dr.**
**Oldenburgerstrasse 74**
**W-8500Nürnberg(DE)**
Erfinder: **Werner, Wolfgang**
**Wilhelm-Spaeth-Strasse 70**
**W-8500 Nürnberg(DE)**

(54) **Kommunikationseinrichtung.**

(57) Eine Kommunikationseinrichtung (11) mit von einem Abfragegerät (12) an wenigstens ein Antwortgerät (13) aussendbarem Abfragesignal (16) soll für preiswerte miniaturisierte Realisierbarkeit bei breitem Einsatzspektrum ausgelegt werden. Dafür wird ein höchstfrequentes Abfragesignal (16) im Schwingkreis (18) des Antwortgerätes (13) mit einer niederfrequenteren Modulationsfrequenz (f) ausgetastet und als Impulsfolge mit der Abfragefrequenz (F) als Trägerfrequenz wieder ausgestrahlt. Als Modulator (20) ist vorzugsweise ein Unterbrecher (21) in Form einer Mikrowellen-Diode (25) im Antwort-Schwingkreis (18) vorgesehen, die zwar noch nicht von der aufgenommenen Amplitude der Abfragefrequenz (F), aber von der jener überlagerten Amplitude der Rechteckschwingungen (f) eines im Antwortgerät (13) aus einer Solarzelle (7) betriebenen Modulations-Oszillators (22) durchgesteuert wird. Dies Pulsmodulation wird vom Abfragegerät (12) wieder aufgenommen und schmalbandig demoduliert. Das ermöglicht die Richtungs-Bestimmung zu einem unsichtbaren, mit dem Antwortgerät (13) ausgestatteten Gegenstand (14) ebenso wie, z. B. über eine Pulslängenmodulation oder eine NF-Umtastung, die Übermittlung einer Steuerungs-, einer Identifizier- oder einer sonstigen aus der Umgebung gelieferten Information. Insbesondere läßt sich diese Kommunikationseinrichtung (11) auch für Kontroll- und Fernsteuerzwecke einsetzen, etwa für die Fahrzeuglenkung oder zur Türen-Entriegelung bei der Annäherung einer Person, die ein auf die Demodulationsfrequenz des türfesten Abfragegerätes (12) abgestimmtes Antwortgerät (13) bei sich trägt.

FIG.2

Die Erfindung betrifft eine Kommunikationseinrichtung gemäß dem Oberbegriff des Anspruches 1.

Eine derartige Einrichtung ist als vielfältig einsetzbares Lokalisierungs-, Identifikations- und Steuersystem aus der US-PS 4,656,463 bekannt. Dort übermittelt ein Abfragegerät gerichtet oder ungerichtet Energie aus einem beliebigen Bereich des elektromagnetischen Strahlungsspektrums (vorzugsweise im Rundfunk- oder Mikrowellenband bzw. als sichtbare optische bzw. unsichtbare thermische Strahlung oder auch im Schall- und Ultraschallbereich) an wenigstens ein Antwortgerät, um im Antwortgerät einerseits einen Ladungsspeicher für dessen Betrieb zu speisen und andererseits dann gegebenenfalls eine Kennung zu decodieren, mit der die vom Abfragegerät ausgesandte Energie moduliert ist. Bei Code-Zuordnung eines bestimmten angesprochenen Antwortgerätes zu dieser Abfrage-Kennung wird ein im Antwortgerät abgespeichertes Binärmuster, das gegebenenfalls auch durch die Abfrageenergie modifizierbar ist, ausgelesen und einem Träger aufmoduliert, der im Antwortgerät erzeugt und von diesem ausgestrahlt wird, um die Binärinformation im Abfragegerät empfangen, demodulieren und auswerten zu können Auf diese Weise können Gegenstände, die mit solchen Antwortgeräten ausgestattet sind, individuell geortet und identifiziert werden sowie durch ihre Akquisition im Abfragegerät dort bestimmte vorgegebene Steuerungsvorgänge auslösen, wie etwa eine Signalgabe zur Diebstahlsverhütung, eine Funktionsfolge bei der automatischen Werkstückbearbeitung oder die Auslösung eines Freigabemechanismus für die Passage nur autorisierter Personen oder Fahrzeuge.

Nachteilig an einer derartigen als Identifikations- und Fernwirksystem einsetzbaren Kommunikationseinrichtung ist vor allem der im Antwortgerät erforderliche schaltungstechnische Aufwand für einerseits Decodierung der Abfragekennung und andererseits Gewinnung der Betriebsenergie zur Verarbeitung der Abfrageinformation aus der Abfrageenergie selbst. Denn daraus resultiert das Erfordernis hoher Leistungsdichte bei der Energieübertragung, die nur über beschränkte Distanz bzw. mit großbauenden Strahlern erzielbar ist. Nachteilig ist darüberhinaus vor allem, daß der Träger der Antwortinformation unabhängig vom Abfragesignal generiert wird, was die Informationsübertragung vom Antwortgerät zum Abfragegerät störanfälliger macht und auswerteseitig, also im Abfragegerät, besonders hohen Schaltungsaufwand bedingt, wenn beispielsweise auch Dopplereffekt ausgewertet werden sollen, um Informationen über die Relativgeschwindigkeit zwischen Abfragegerät und Antwortgerät zu gewinnen.

In Erkenntnis dieser Gegebenheiten liegt der Erfindung die Aufgabe zugrunde, eine Kommunikationseinrichtung gattungsgemäßer Art derart auszulegen, daß der schaltungstechnische Aufwand und damit Energiebedarf im Antwortgerät minimal wird und dennoch, auch bei Einsatz mehrerer derartiger Einrichtungen in räumlicher Nähe, eindeutige Abfragemöglichkeiten über größere Distanzen vielfältige Möglichkeiten der Informationsgewinnung und selektiven Fernwirkung vom Antwortgerät her eröffnen.

Diese Aufgabe ist erfindungsgemäß im wesentlichen dadurch gelöst, daß die gattungsgemäße Kommunikationseinrichtung gemäß dem Kennzeichnungteil des Anspruches 1 ausgelegt ist.

Nach dieser Lösung generiert das Antwortgerät keinen eigenen Antwort-Träger, sondern es arbeitet als modulierender Transponder für die aufgenommene Frequenz des Abfragesignales. Da die Modulation der aufgenommenen und wieder abgestrahlten Abfragefrequenz einfach in einer Austastung mit einer für das individuelle Antwortgerät charakteristischen Chopper-Frequenz besteht, ist sowohl der schaltungstechnische Aufwand im Antwortgerät wie auch der Energiebedarf zu seinem Betrieb extrem gering. Schon ein kleiner elektrischer Ladungsspeicher erbringt für die Praxis hinreichende Betriebszeitspannen, zwischen denen er (etwa eine Primär- oder eine Sekundärbatterie) für eine neue Betriebsperiode des Antwortgerätes ausgetauscht oder nachgeladen werden kann. Wegen des geringen Leistungsbedarf für den Betrieb des Antwortgerätes, nämlich seines Oszillators für die Impulslängenmodulation des aufgenommenen und wieder abgestrahlten Abfragesignales, genügt in der Praxis sogar eine kleine Solarzelle für das Nachladen eines phyikalischen oder chemischen Ladungsspeichers aus der Umgebungshelligkeit, wie etwa bei kleinen Taschenrechnern oder solar-betriebenen Armbanduhren bekannt.

Die Antwort-Modulation durch Choppen des im Antwortgerät aufgenommenen und ohne Frequenzumsetzung wieder abzustrahlenden Abfragesignales erfordert trotz höchster betriebstechnischer Zuverlässigkeit minimalen schaltungstechnischen Aufwand. Denn das empfangene Abfragesignal kann einfach dadurch zu Trägerfrequenz-Impulspaketen moduliert werden, daß der elektrische Schwingkreis an der Antenne des Anwortgerätes im Rhythmus der Modulationsfrequenz beeinflußt, nämlich impedanzmäßig verändert oder gar ganz unterbrochen wird. Für letzteres genügt schn der Einsatz einer Diode, die zwar noch nicht von der aufgenommenen Amplitude des Abfragesignales, wohl aber von der ihm überlagerten Amplitude der Chopper-Modulationsfrequenz über ihre Schwellspannung hinaus in den exponentiell steigenden Durchlaßbereich der Diodenkennlinie ausgesteuert wird, wofür eine problemlos realisierbare miniaturisierte Rechteck-Oszillatorschaltung in den Antennen-Schwingkreis mit jener Diode eingeschaltet werden kann. Das zu modulierende Abfragesignal muß also nur lang sein im Verhältnis zu den Modulationsimpulsen, in die es zerhackt wird; im einfachsten Falle strahlt das Abfragegerät einfach ein unmoduliertes Dauer-Signal ab, dessen von der Transponderantenne des Antwortgerätes aufgenommene Leistung mittels des nicht linearen Bauelementes vor der Wieder-Aussendung periodisch gedämpft wird. Ein besonders breites Spektrum möglicher Antwort-Kennungen läßt sich schaltungstechnisch einfach dadurch erzielen, daß im Antwortgerät nicht nur eine Chopper-Frequenz generiert wird, sondern eine beispielsweise periodische Umschaltung zwischen unterschiedlichen Folgefrequenzen der zerhackten Trägerfrequenzimpulse des Abfragesignales erfolgt.

Insbesondere bei Einsatz eines Zerhacker-Oszillators mit veränderbarer Frequenz, z. B. realisierbar als spannungsgesteuerter Oszillator, kann eine externe oder vorprogrammierte Beeinflussung der Modulation vorgesehen sein, um nicht nur, über die Orientierung der Antennen-Richtcharakteristik des Abfragegerätes, eine Orientierung zum mit dem Antwortgerät ausgestatteten Gegenstand zu bekommen, sondern im Antwortsignal über die Modulationsfrequenz abhängig vom individuellen Träger dieses Antwortgerätes auch eine Kennung der Träger-Identifizierung, eine Kontroll- bzw. Steuerungsinformation oder eine Information über Umgebungszustände übermitteln zu können.

Wenn für die Trägerfrequenz auch gattungsgemäß das gesamte elektromagnetische Spektrum zur Verfügung steht, ist es im Interesse der Miniaturisierung des Antwortgerätes doch zweckmäßig, den Mikrowellenbereich (um 10 GHz) oder sogar den darüberliegenden Millimeterwellenbereich (um 100 GHz) für den Träger des durch Impulsaustastung zu modulierenden Abfragesignales zu wählen. Dann kann im Abfragegerät für die Auswertung der empfangenen modulierten Abfrageenergie auf die aus der Radartechnik standardisiert und preiswert verfügbaren Schaltungen zurückgegriffen werden, während sich Transponder-Antennen besonders klein bauend als Mikrostreifenleitungsantennen realisieren lassen, aber auch beispielsweise als kleine Dipolantennen oder Hornantennen.

So eröffnet die erfindungsgemäße Lösung den Aufbau einer miniaturisierten Kommunikationseinrichtung für Such-, Identifizier- und Fernsteueraufgaben, wobei das Transponder-Abfragegerät an oder in dem Objekt angeordnet ist, das bei Erfassung von der Sendeenergie des Abfragegerätes in diesem Abfragegerät eine bestimmte Funktion auslösen soll wie etwa einen optischen oder akustischen Hinweis auf die hergestellte Kommunikationsverbindung bei der Akquisition des Gerätes hinsichtlich seiner Identität bzw. hinsichtlich seiner Lage und/oder Bewegungskomponente bezüglich einer momentanen Abfrage-Suchrichtung.

Das Abfragegerät kann aber beispielsweise auch in der Nähe der Tür eines Fahrzeuges, insbesondere eines Zustellfahrzeuges wie zur Paketauslieferung, installiert sein, die automatisch verriegelt, also den verbleibenden Fahrzeuginhalt einschließt, wenn der Austräger z. B. die Tür hinter sich zuschlägt. Wenn er dann mit seinen Quittungsunterlagen und den vielleicht nicht zustellbaren Paketen zum Fahrzeug zurückkehrt, soll er nicht erst einen Schlüssel suchen und betätigen müssen, sondern die dann (bei hinreichender Annäherung ans Fahrzeug) wirksame Mikrowellen-Nachrichtenverbindung zwischen seinem als Bekleidungs-Anstecker oder nach Art einer Armbanduhr getragenen Antwortgerät und dem am Fahrzeug installierten Abfragegerät erzeugt empfangsseitig aus dem pulsmodulierten Antwortsignal ein Steuersignal für eine Stelleinrichtung mit Entriegelungsfunktion an der Fahrzeugtür, so daß diese wieder aufspringt bzw. durch bloßen manuellen Zugriff wieder geöffnet werden kann.

Dadurch ist Diebstählen an der Ladung während der Abwesenheit des Auslieferfahrers wirksam vorgebeugt, ohne daß vom Auslieferfahrer zeitraubende und umständliche manuelle Operationen verlangt werden. Eine zusätzliche Ansteuerung eines Mechanismus etwa zum Aufschieben einer Fahrzeug-Schiebetür nach ferngesteuerter Entriegelung bei Annäherung des Berechtigten (des Trägers des Transponders) kann zweckmäßig sein, erübrigt sich aber, wenn der Türverschluß unter derartiger elastischer Vorspannung steht (etwa mittels Dichtungsgummiwülsten), daß die Tür schon aufspringt, wenn nur die Schloß-Verriegelung wie vorstehend dargestellt freigegeben wird.

Ein anderes interessantes Einsatzgebiet erscheint im Versehrtenbereich gegeben, um vorbereitete Funktionen annäherungsabhängig auszulösen, ohne daß ein Behinderter gezielte manuelle Tätigkeiten verrichten muß.

Da solche kooperative Informations-Übermittlungseinrichtung im Antwortsignal mit der Trägerfrequenz des aufgenommenen Abfragesignales arbeitet, ist ein voll-kohärenter Betrieb über die Abfrage- und Antwort-Strecke gewährleistet, was über eine Auswertung der Dopplerverschiebung zusätzlich Informationen über Relativgeschwindigkeiten und Abstandsänderungen zwischen dem zentralen Abfragegerät und unterschiedlichen, einzeln anpeilbaren Antwortgeräten eröffnet. Außerdem ist durch diesen kohärenten Betrieb eine der aktuell gegebenen Sendefrequenz nachgeführte schmalbandige Detektion der Modulationsinformation im Antwortsignal möglich, so daß störende Interferenzen auch dann praktisch nicht zu befürchten sind, wenn mehrere gleichartige (zwangsläufig aber mit etwas unterschiedlichen Trägerfrequenzen arbeitende) Abfragegeräte im gleichen Gebiet betrieben werden.

Zusätzliche Alternativen und Weiterbildungen sowie weitere Merkmale und Vorteile ergeben sich aus den weiteren Ansprüchen und, auch unter Berücksichtigung der Darlegungen in der Zusammenfassung, aus nachstehender Beschreibung bevorzugter Anwendungsbeispiele anhand von in der Zeichnung nach Art einpoliger Blockschaltbilder stark abstrahiert skizzierter bevorzugter Realisierungs- und Anwendungsbeispiele zur erfindungsgemäßen Lösung. In der Zeichnung zeigt:

Fig. 1 in Prinzipdarstellung die Wirkung der Kommunikationseinrichtung mit einem Abfragegerät, das auf unterschiedlich positionierte Gegenstände mit Antwortgeräten ausrichtbar ist, wobei in den Antwortgeräten unterschiedliche Schaltungsbeispiele für die Chopper-Modulation des rückzusendenden Abfragesignales berücksichtigt sind, und

Fig. 2 die Kommunikationseinrichtung im Einsatz als Identifizierungs- und Fernwirksystem.

Die in der Zeichnung blockschaltmäßig skizzierte Hochfrequenz-Kommunikationseinrichtung 11 besteht aus wenigstens einem stationär oder mobil einsetzbaren Abfragegerät 12 und wenigstens einem chipartig miniaturisierten Antwortgerät 13, das an oder in einem toten oder lebenden Gegenstand 14 betreibbar ist, der im Abfragegerät 12 eine vorgegebene Reaktion auslöst, wenn dessen Demodulator auf die Kennungsmodulation vom Antwortgerät 13 anspricht.

Das Abfragegerät 12 sendet dafür über eine, hier als Hornstrahler skizzierte, Sende-Empfangs-Antenne 15 ein Abfragesignal 16 aus, bei dem es sich um eine modulierte oder unmodulierte Höchstfrequenz handeln kann, vorzugsweise um einen Dauerstrich-Träger im Millimeterwellen- oder Mikrowellen-Bereich des elektromagnetischen Strahlungsspektrums. Dieses Abfragesignal 16 wird von der Empfangs-Sende-Antenne 17 des Antwortgerätes 13 aufgenommen, die vorzugsweise eine möglichst wenig ausgeprägte Richtcharakteristik aufweist und einfach als flächige oder gekreuzte Mikrostreifen-Leitungsantenne ausgebildet sein kann, aber auch als (Kreuz-) Dipol- oder -Horn-Antenne bzw. als Doppelkonusantenne.

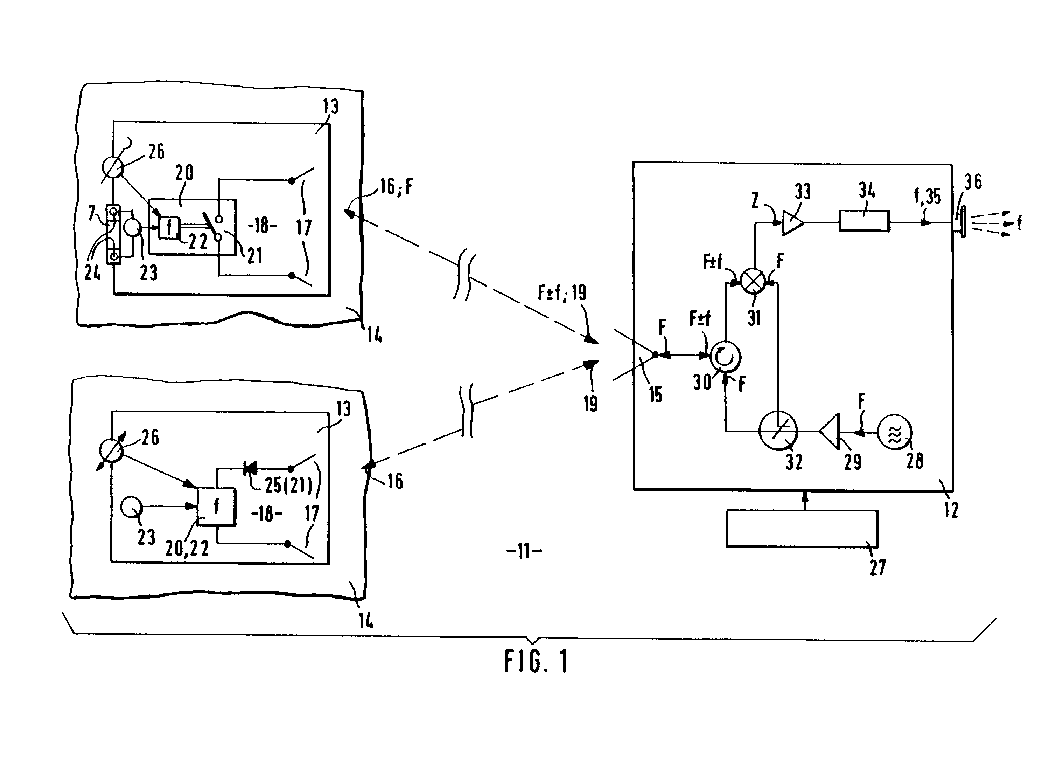

Die in den an die Antwort-Antenne 17 angeschlossenen, bezüglich der Trägerfrequenz des Abfragesignales 16 auf Resonanz abgestimmten Schwingkreis 18 übergebene Energie wird mit der gleichen Frequenz als Antwortsignal 19 von der Antwort-Antenne 17 wieder abgestrahlt und von der Abfrage-Antenne 15 wieder aufgenommen. Jedoch unterscheidet sich das Antwort-Signal 19 vom Abfrage-Signal 16 in einer Modulation, die durch kurzzeitige Beeinflussungen des Antennen-Schwingkreises 18 hervorgerufen wurde und empfangsseitig dann als Impulsdauer- oder Frequenzmodulation detektierbar ist. Das ist in der Fig. 1 links oben durch einen Pulsmodulator 20 mit einem Zerhacker- oder Schalt-Unterbrecher 21 veranschaulicht, der aus einem freilaufenden lokalen Oszillator 22 getaktet wird. Um mit einem Minimum an von der jeweiligen Antwort-Antenne 17 aufzunehmender Energie für den Betrieb dieser Kommunikationseinrichtung 11 auszukommen, wird der Pulsmodulator 20 bzw. sein Oszillator 22 nicht aus der über die Antwort-Antenne 17 aufgenommenen Energie des Abfragesignales 16, sondern aus einem lokalen Energiespeicher 23 gespeist. Bei diesem kann es sich um eine miniaturisierte Primärzelle (etwa eine Knopfbatterie) handeln, oder aber um einen physikalischen oder chemischen Sekundär-Energiespeicher (Kondensator oder Akkumulator), welcher eventuell über einen ohmschen oder einen kontaktlos arbeitenden (etwa induktiven) Speiseanschluß 24 zu Betriebsbeginn aufladbar und gegebenenfalls auch in gewissen Abständen aus einem Primär- oder Sekundär-Energiereservoir nachladbar ist. Auf jeden Fall braucht die Kapazität des Energiespeichers 23 nur recht beschränkt zu sein, da ein solcher Oszillator 22 außerordentlich sparsam betrieben werden kann, so daß es schon genügt, den Speicher 23 als Puffer hinter einer kleinen Solarzelle 7 anzuordnen, die von der Umgebungshelligkeit aktiviert ist.

Gemäß der links unten in Figur 1 skizzierten bevorzugten Realisierung für den Pulsmodulator 20 arbeitet die Antwort-Antenne 17 über ihren Schwingkreis 18 auf einen Unterbrecher 21 in Form einer Halbleiter-Diode 25, die, zusätzlich zur Speisung aus der Antenne 17, mit einer Rechteck-Amplitude aus dem Steuer-Oszillator 22 für die Unterbrechungs-Modulation beaufschlagt wird. Die Amplitude der über die Antwort-Antenne 17 aufgenommenen Energie des Abfragesignales 16 reicht für die Spannungs-Aussteuerung eines nicht linearen Elementes (Diode 25) über dessen Knick- oder Schwellspannung hinaus (also bei einer Diode 25 in den exponentiell steigenden Kennlinienzweig der I/U-Kennlinie hinein) nicht aus. Diese Spannung wird erst überschritten und damit der Stromkreis des Schwingkreises über die Diode 25 geschlossen, wenn die in Durchlaßrichtung gepolte momentane Amplitude der Ausgangsfrequenz des Oszillators 22 gerade an der Diode 25 ansteht. Während Anstehens der umgekehrten Oszillator-Amplitude ist dann die Diode 25 wieder gesperrt, der Schwingkreis 18 deshalb über die halbe Schwingungslänge der Ausgangsfrequenz f des Oszillators 22 gesperrt. Während dieser Halbschwingung wird die aufgenommene Energie (und Frequenz) des Abfragesignales 16 also nicht als Antwortsignal 19 wieder abgestrahlt, während über die zweite Hälfte der Schwingung der Oszillatorfrequenz f ein Paket von dagegen sehr viel höherfrequenteren Trägerschwingungen der Abfragefrequenz F als Antwortsignal 19 von der Transponder-Antenne 17 ausgestrahlt wird.

Im Interesse eines eindeutigen Schaltverhaltens des Pulsmodulators 20 wird als aus dem Oszillator 22 steuerbarer Unterbrecher 21 zweckmäßigerweise eine Diode 25 mit extrem niedrigem und konstantem Reststrom unterhalb einer sehr knickausgeprägten Schwellspannung eingesetzt, wie sie für den X-Band- (also GHz-)Bereich des Höchstfrequenzspektrums als sogennte Lowbarrier-Schottkydiode am Bauelementenmarkt verfügbar ist.

Um voneinander unterscheidbare spezifische Informationen wie Identifizierungs-Informationen oder Augenblicks-wert-Informationen mit dem pulsmodulierten Antwortsignal 19 an das Abfragegerät 12 übermitteln zu können, kann im oder am Abfragegerät 12 ein definiert voreinstellbares (gegebenenfalls auch später in seiner Einstellung änderbares - in der Fig. 1 oben links - oder ein selbsttätig sich einstellendes - in der Fig. 1 unten links - Stellglied 26 zur Beeinflussung der modulierenden Oszillatorfrequenz f vorgesehen sein. Die unterschiedliche Breite der Impulse und Impulspausen und damit die unterschiedliche Anzahl an Trägerschwingungen des Abfragesignales 16 im Antwortsignal 19 ist dann ein Maß für die aktuell aus dem Stellglied 26 gelieferte Information, womit eine berührungslose und auch nicht auf Sichtkontakt angewiesene Fern-Identifikation von toten oder lebenden Gegenständen ebenso ermöglicht wird, wie (zusätzlich zu oder unabhängig von der Identifikation) die Übermittlung aktueller Meßergebnisse aus dem ein Transponder-Antwortgerät 13 aufweisenden Gegenstand 14 bzw. aus dessen Umgebung. Stattdessen oder zusätzlich kann (in der Zeichnung nicht schaltungsmäßig ausgeführt) auch eine Variation des Puls-Pausen-Verhältnisses bei der Austastung des rückgemeldeten Abfragesignales 16 oder eine komplexere Modulation erfolgen, insoweit der im Antwortgerät 13 enthaltene Energiespeicher 23 bei den gegebenen Raum- und möglicherweise gegebenen Nachladeverhältnissen für eine hinreichend lange Betriebszeitspanne auslegbar ist.

Das Abfragegerät 12 wird aus einer mobilen oder stationären Energiequelle 27 betrieben, die nach der Leistung des auszusendenden Abfragesignales 16 und damit gemäß der zu überbrückenden Distanz zwischen Abfragegerät 12 und Antwortgerät 13 dimensioniert ist, bzw. gemäß den durch umgebendes Gelände oder durch eine Implantations-Umgebung bestimmten Empfangs-Abschattungsgegebenheiten vor der Antwort-Antenne 17.

Die Frequenz F des unmodulierten Dauerstrich-Sende- oder Abfrage-Signales 16 wird von einer höchstfrequenten Signalquelle 28 geliefert, die über einen Sendeverstärker 29 und eine Sende-Empfangs-Weiche 30 (bei der Mikrowellen-Frequenz ausgelegt als Zirkulator) die gerichtete Abfrage-Antenne 15, und außerdem den Empfangs-Mischer 31 über eine Auskopplung 32 mit der Rückmischleistung, speist.

Die hinter dem Mischer 31 anstehende Zwischenfrequenz Z ist auf die Modulationsfrequenz f vom Rechteck-Oszillator 22 in diesem Abfragegerät 12 zugeordneten Antwortgeräten 13 abgestimmt und liegt vorzugsweise in einem Frequenzbereich um 1/1000 der ausgesandten Abfragefrequenz F. Über einen vorzugsweise schmalbandigen Zwischenfrequenz-Verstärker 33 wird ein herkömmlicher Empfänger 34 gespeist, der die demodulierte Zwischenfrequenz Z als Indikator-Signal 35 ausgibt und beispielsweise einen elektroakustischen oder elektrooptischen Wandler 36 betreibt. Die so hörbar oder sichtbar gemachte Signalamplitude des demodulierten Signales 35 der Osziallator-Antwortfrequenz f ist ein Maß dafür, wie genau die Richtcharakteristik einer Antenne 15 auf das Transponder-Antwortgerät 13 ausgerichtet ist und wie stark sich bei einer Annäherung die Entfernung verringert bzw. (bei im übrigen vorgegebenen Übertragungsverhältnissen) wie stark die umgebungsbedingte Abschattung der gerade erfaßten Antwort-Antenne 17 ist.

Wenn die Antwort-Modulationsfrequenz f bekannt und hinreichend konstant ist, kann die Demodulation im Abfragegerät 12 auch mittels eines auf die Oszillatorfrequenz f getasteten Synchrondetektors erfolgen. Für unterschiedliche Modulationsfrequenzen f können mehrere Empfänger 34 bzw. umschaltbare Empfänger 34 in einem Abfragegerät 12 oder entsprechend unterschiedlich ausgestattete Abfragegeräte 12 vorgesehen sein, mit denen dann jeweils eine bestimmte (durch die Frequenz f charakterisierte) Gruppe von Gegenständen 14 gesucht bzw. abgefragt werden kann. Wegen des schmalbandig abgestimmten Zwischenfrequenz-Verstärkers 33 im Empfangspfad eines jeden Abfragegerätes 12 und auch wegen der nicht unbedingt zeitlich sehr frequenzkonstanten Höchstfrequenz-Signalquelle 28 sind wechselseitige Störungen bei gleichzeitigem Betrieb unterschiedlich abgestimmter Abfragegeräte 12, deren Antennenkeulen zufällig gerade aufeinander-zugerichtet sein können, nicht zu befürchten - allenfalls erscheint hinter einem Empfänger 34 ein kurzer demodulierter Frequenz-Sweep, wenn zufällig die Frequenzgemische der beiden unterschiedlich abgestimmten Abfragegeräten 12 vorübergehend hinreichend übereinstimmen.

Das einstellbare Stellglied 26 zum Liefern einer individuellen aktuellen Modulations-Information kann auch ein Mustergenerator sein, der beispielsweise in einem vorgegebenen Zeitraster bestimmte Modulationsfrequenz-Sprünge (Pulspaket-Längen) hervorruft und vorprogrammiert oder umprogrammierbar sein kann. Damit ist es beispielsweise möglich, eine Kennung zu erzeugen, die nur während eines vorgegebenen Zeitraumes (etwa während eines Kalenderjahres) seitens des Empfängers 34 als "zutreffend" interpretiert wird. Anstelle der herkömmlichen Vignetten zum Nachweis der bezahlten Straßenbenutzungsgebühr kann dann am Kraftfahrzeug ein für das aktuelle Kalenderjahr kodiertes Antwortgerät, etwa hinter der Windschutzscheibe, befestigt werden, das beim Passieren einer Mautstelle automatisch vom dort ortsfest installierten Abfragegerät 12 auf Gültigkeit im gegebenen Kalenderjahr abgefragt wird, um zutreffendenfalls die Fahrt freizugeben. Eine andere Einsatzmöglichkeit der erfindungsgemäßen Kommunikationseinrichtung 11 liegt in der Waren-Identifizierung, die bisher überwiegend über Barcode-Laser erfolgt, also unmittelbare Abfrage-Nähe benötigt. Derartige Gegebenheiten sind aber beispielsweise nicht realisierbar bei der Artikel-Suche in einem Hochregal-Lager. Dagegen genügt die Reichweite einiger 10 Meter bei der erfindungsgemäßen Kommunikationseinrichtung 11, um aus entsprechend großem Abstand mittels des Abfragegerätes 12 nach der momentanen (vielleicht nicht einmal einsehbaren) Ablageposition eines Gegenstandes 14 zu suchen, der mit einem in seiner Modulation identifizierten Antwortgerät 13 ausgestattet ist. Mittels derartiger codierter Antwortgeräte können auch Container, Güterwagons und dergleichen individuell erfaßt und z. B. in ein Leitsystem eingesteuert werden, oder in der Tierhaltung werden die unterschiedlichen Nutztierarten und Jahrgänge durch implantierte Miniatur-Antwortgeräte mit entsprechend individualisierten Modulationen gekennzeichnet. In gleicher Weise können über größere Distanzen Betriebskennwerte wie Temperaturen oder Taktfrequenzen an leblosen oder lebenden, z. B. unter Streß-Beanspruchung stehenden Gegenständen 14 ermittelt werden, die mit derartigen Antwortgeräten 13 und meßwertgesteuerten Stellgliedern 26 ausgestattet sind. Die aktuelle Modulationsfrequenz f und die Länge der Trägerfrequenz-Impulspakete der Abfragefrequenz F sind dann ein Maß für den momentan über größere Distanz abgefragten Meßwert.

Die erfindungsgemäß mit einem Stellglied 26 zur informativen Beeinflussung der modulierenden Oszillatorfrequenz f ausstattbare Kommunikationseinrichtung 11 der vorstehend beschriebenen Art läßt sich insbesondere auch vorteilhaft zur Funktions-Fernerkundung von mit Antwortgeräten 13 ausgestatteten Gegenständen 14 im Sinne von autarken oder drahtlos-ferngesteuerten Anlagen verwenden, die beispielsweise aufgrund ihres mobilen Einsatzes oder ihres Einsatzes in nicht erschlossenen Gegenden nicht an ein Netz zur Rückübermittlung von Betriebsdaten anschließbar sind. Dabei kann beispielsweise an grundwassergesteuerte Pumpen oder temperaturgesteuerte Bewässerungsanlagen in unzugänglichem Gelände gedacht sein, das von einem Beobachtungspunkt aus eingesehen werden kann, von dem aus dieses Gelände mit der Richtkeule der Abfrage-Antenne 15 abgeschwenkt wird, um die momentanen Betriebszustände der einzelnen Gerätschaften (Gegenstände 14) oder beispielsweise den verbliebenen Kraftstoffvorrat für deren Antriebseinrichtungen rasch und zuverlässig erfassen zu können. Anders als bei der Suche oder Identifikation von Gegenständen 14 mit zufälliger bzw. unbekannter Orientierung zum Abfragegeräte 12 ist in solchem Falle anstelle der ungerichteten Sende- und Empfangs-Antenne 17 der Antwortgeräte 13 eine auf den vorgegebenen Beobachtungspunkt ausgerichtete Antenne 17 zweckmäßiger, da damit dann noch größere Distanzen überbrückbar sind. Bei den Gegenständen 14 kann es sich aber auch beispielsweise um Minen handeln, die vom Pionier in einem definierten Geländeabschnitt ausgesetzt wurden und nach Scharfschaltung über eigene Sensorik oder über Funk-Fernsteuerung wieder abschaltbar sind, um bedarfsweise die Passage für eigene Mannschaften freizugeben. Wenn der aktuell gegebene Funktionsbereitschaftszustand die Information für das Stellglied 26 ist, dann kann der Pionier mittels des Abfragegerätes 12 aus ungefährlicher Entfernung feststellen, ob die Mine sich tatsächlich im erwarteten Zustand befindet und demzufolge eine gefahrlose Annäherung derzeit möglich ist. Andererseits läßt sich das Antwortgerät 13 als Eichgerät bzw. Kalibrator für Dauerstrich-Radargeräte einsetzen, wie sie zur Verkehrs-Geschwindigkeitsüberwachung Anwendung finden, indem die modulierende Oszillatorfrequenz f eine bestimmte Dopplerverschiebung simuliert.

Schließlich kann die erfindungsgemäße Kommunikationseinrichtung 11 auch unmittelbar zur Messung der Relativgeschwindigkeit eingesetzt werden, da dieses System voll-kohärent (also phasenstarr über die Sende-Empfangs-Strecke) arbeitet, denn im Antwortgerät 13 wird keine eigene Antwortfrequenz generiert, sondern die zerhackte Abfragefrequenz F selbst rückgesandt. Die seitens des Abfragegerätes 12 empfangene Frequenz ist bei zeitvariabler Übertragungsstrecken-Länge eine Kombination aus der ausgesandten Abfragefrequenz F, der transponderseitigen Modulationsfrequenz f und zusätzlich der Dopplerfrequenz. Durch Auswerten dieses zusätzlichen Dopplerfrequenzanteils im Empfangszweig des Abfragegerätes 12 (in der Zeichnung nicht näher veranschaulicht) kann also die radiale Geschwindigkeitskomponente zwischen Abfragegerät 12 und gerade von seiner Antenne 15 erfaßtem Antwortgerät 13 gemessen werden.

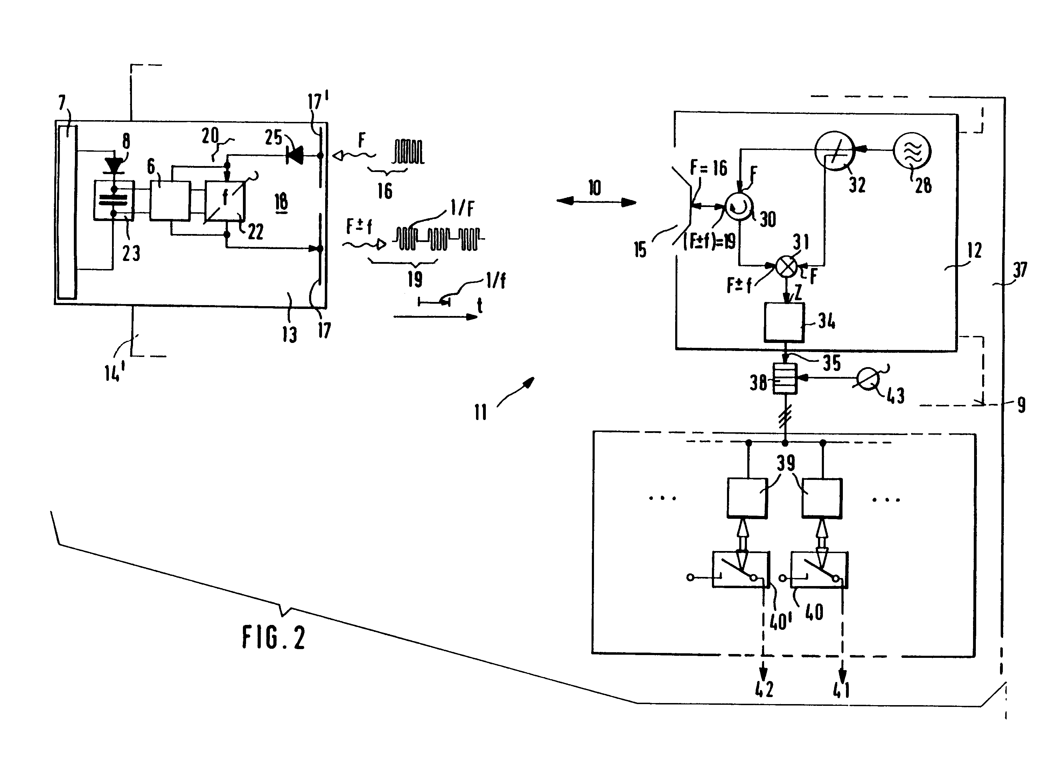

Bei der Kommunikationseinrichtung nach Fig. 2 wird der miniaturisierte aktive Mikrowellen-Transponder als Antwortgerät 13 von einem autorisierten Träger 14' mitgeführt, etwa in der Jackentasche nach Art einer elektronischen Smart-Chipkarte eingesteckt, auf dem Revers als Bottom angesteckt oder als am Armband getragenes Gerät bzw. in eine elektronische Armbanduhr eingebautes Antwortgerät 13. Eine Zweirichtungs-Nachrichtenverbindung 10 für Mikrowellenenergie ist bei dieser Auslegung dann und nur dann zwischen dem Abfragegerät 12 und dem Antwortgerät 13 drahtlos wirksam, wenn der Träger 14' sich hinreichend dicht (in die Größenordnung einiger Meter) an den Einbauort 9 des Abfragegerätes 12 angenähert hat. Dann überträgt das Abfragegerät mittels einer Sende-Empfangs-Antenne 15 (von allenfalls wenig ausgeprägter Richtwirkung) ein Abfragesignal 16 an die Aufnahme-Antenne 17' des Abfragegerätes 13.

Die in den an die Aufnahme-Antenne 17' angeschlossenen, bezüglich der Trägerfrequenz F des Abfragesignales 16 auf Resonanz abgestimmten, Schwingkreis 18 übergebene Energie wird mit der gleichen Frequenz F im Antwortsignal 19 von der Antwort-Antenne 17 in die Nachrichtenverbindung 10 wieder abgestrahlt, also von der Abfrage-Antenne 15 wieder aufgenommen. Jedoch unterscheidet sich das Antwort-Signal 19 vom Abfrage-Signal 16 in einer Modulation, die durch eine Folge kurzzeitiger Beeinflussungen des AntennenSchwingkreises 18 mittels eines nichtlinearen Elementes hervorgerufen wird und empfangsseitig im Abfragegerät 12 als Impulsdauer- oder als Frequenz-Modulation detektierbar ist. Der kontinuierliche Schwingungszug des Abfragesignales 16 wird also mittels dieses antwortseitigen Pulsmodulators 20 in Schwingungs-Pulspakete zerhackt, deren Tastverhältnis durch dasjenige des Kennungs- Oszillators 22 (geringfügig modifiziert aufgrund des Schwellenverhaltens der Unterbrecher-Diode 25) bestimmt ist. Der Oszillator 22 kann direkt aus einer kleinen flachen Solarzelle 7, wie sie bei Taschenrechnern im Einsatz ist, gespeist werden. Für Betrieb auch in Dunkelheit ist ein Energiespeicher 23 zwischenzuschalten, der über eine Rückstrom-Sperrdiode 8 aus der Solarzelle 7 nachgeladen wird. Diese kann bei einem kartenförmigen Antwortgerät 13 neben oder über den Streifenleitungen für die Antennen 17, 17' angeordnet sein. Wenn eine pegelgesteuerte Schaltstufe 6 zwischen dem Zerhacker-Oszillator 22 und seiner Betriebs-Speisung aus dem Energiespeicher 23 eingefügt ist, wird der nur und so lange über den Oszillator 22 belastet, als tatsächlich die Nachrichtenverbindung 10 aufgrund hinreichender Annäherung an das Abfragegerät 12 aktiv ist und somit von der Aufnahme-Antenne 17' die Hochfrequenzenergie des Abfragesignales 16 ausreichend stark empfangen wird. Denn dann reicht die Nachladung des Energiespeichers 23 aus der Solarzelle 7 auch für den ja nur vorübergehend kurzzeitig betriebenen Oszillator 22 bei momentan abgeschatteter Solarzelle 7 oder während der dunklen Tageszeit, zumal ein solcher Oszillator 22 außerordentlich sparsam im Verbrauch realisiert werden kann.

Unterschiedliche Berechtigungen hinsichtlich des Einsatzes dieses Antwortgerätes 13 können sich durch unterschiedliche Oszillatorschwingungen f des Kennungs-Oszillators 22 hinsichtlich Periodizität und/oder Tastverhältnis der Rechteckschwingungen unterscheiden. Dabei können auch bestimmte Nutzergruppen identifiziert werden, die etwa grundsätzlich hinsichtlich der Rechteck-Schwingungsfrequenz im Antwortsignal 19 übereinstimmen, sich aber im Tastverhältnis hinreichend signifikant unterscheiden, um beispielsweise hierarchisch gestaffelt unterschiedliche Berechtigungsniveaus für eine Zugangskontrolle realisieren zu können. Das ist in der Zeichnung durch das "Einstell"-Symbol über der Oszillator-Schwingung f des Kennungs-Oszillators 22 berücksichtigt.

In der Regel ist bei der Realisierung dieser Fernsteuer-Einrichtung 11 der Einbauort 9 des Abfragegerätes 12 bezüglich des Antwortgerätes 13 stationär oder quasi-stationär, etwa an einem Schutzgegenstand 37 wie einem Gebäude oder einem Fahrzeug mit zu verriegelndem oder zur entriegelndem Schließmechanismus an seiner Zugangstür. Im Abfragegerät 12 wird die Energie mit der Abfragefrequenz F des unmodulierten Dauerstrich-Signales 16 von einer höchstfrequenten Signalquelle 28 geliefert. Diese speist einen Mikrowellen-Zirkulator als Sende-Empfangs-Weiche 30. Ein Mischer 31 ist sowohl einer Auskopplung 32 für Rückmischleistung wie auch der Weiche 30 für das Antwortsignal 19 nachgeschaltet, um eine Zwischenfrequenz-Information Z an einen schmalbandigen Empfänger 34 zu liefern. Der übergibt die aus der Zwischenfrequenz Z demodulierte Kennungsfrequenz f als Steuer-Signal 35 an einen Programmspeicher 38, um eine bestimmte vorgegebene Funktionsfolge (gegebenenfalls: eine ausgewählte von mehreren möglichen Funktionsfolgen) auszulösen. Die Folgefunktion besteht insbesondere in der Aktivierung einer elektromechanischen oder elektropneumatischen Stelleinrichtung 39, um bestimmte Funktionen 40, 40' zu aktivieren wie insbesondere die Verriegelung oder die Entriegelung von Einlaßeinrichtungen 41 (wie Fahrzeugoder Gebäude-Türen) am zu schützenden Einbau-Gegenstand 37 und/oder die Einstellung von Bedien- bzw. Komfort-Einrichtungen 42, wie etwa im Falle der Kraftfahrzeug-Sitzverstellung mit Anpassung der Innen- und Außen-Spiegeljustagen, die in als solcher bekannter Weise zuvor einmal vom Fahrer manuell optimiert und als diesem Fahrer zugeordnete Positionsinformationen im Programmspeicher 38 abgelegt sind. Wenn mehrere Berechtigte hinsichtlich dieses Fahrzeugs 37 aufgrund etwa körperlicher Gegebenheiten unterschiedliche Positionseinstellungen bevorzugen, die zur Auswahl im Programmspeicher 38 bereitgehalten werden, dann können an diese Personen Antwortgeräte 13 abgegeben werden, die etwa hinsichtlich der Türen-Zentralentriegelung gleich kodiert sind, aber voneinander unterscheidbare Pulsmodulationen aufweisen, also unterschiedliche Steuersignale 35 für die Aktivierung bestimmter Teile des Programmspeichers 38 erzeugen. Es kann aber auch vorgesehen sein, alle Berechtigte mit untereinander gleich kodierten Antwortgeräten 13 auszustatten und beispielsweise im Fahrzeug selbst über einen Auswahlschalter 43 dasjenige vorgespeicherte Optimierungsprogramm zur Aktivierung mittels des Steuersignales 35 auszuwählen, das dem momentanen Fahrzeugbenutzer angepaßt ist. Dann mögen zwar die Einstellungen bei erstmaligem Besteigen des Fahrzeugs noch nicht die richtigen sein und erst durch die aktuelle persönliche Zuordnung am Auswahlschalter 43 aktiviert werden; wenn zwischendurch dann ein anderer Nutzer (ohne Einsatz dieser Möglichkeiten) manuell Einstellungen ändert, werden nachfolgend die Standardeinstellungen automatisch wieder gerichtet, wenn der Nutzer mit dem Antwortgerät 13 infolge Annäherung an das Fahrzeug die Nachrichtenverbindung 10 herstellt.

Apparativ am einfachsten ist es, wenn eine Verriegelung mit dem manuellen Zuschlagen einer Tür schließt und die Entriegelungs-Auswertung im Abfragegerät 12 erst dann und dadurch freigegeben wird, daß über eine voreingestellte Zeitspanne hinweg die Mikrowellenverbindung 10 zum Antwortgerät 13 unterbrochen war. Dadurch wird die Tür noch nicht wieder entriegelt, solange der Fahrer sich noch in ihrer Nähe aufhält. Erst wenn er sich entfernt (oder wenigstens mit seinem Antwortgerät 13 einige Zeit vom fahrzeugfesten Abfragegerät 12 abgewandt) hatte, führt die Wieder-Herstellung der Nachrichtenverbindung 10 wieder zur Entriegelung und gegebenenfalls Öffnung der Tür ohne das Erfordernis, Schlüssel zu betätigen. Zweckmäßiger noch als eine solche Pegel-Auswertung kann es sein, im Empfänger 34 den momentanen Ablauf des sich Entfernens bzw. Annäherns über die von der Änderung der Relativentfernung abhängige mittlere Dopplerverschiebung auszuwerten, die angesichts der hohen Frequenz F des Abfragesignales 16 sehr deutlich ausfällt. Damit sind eindeutige Verriegelungs- bzw. Entriegelungs-Operationen in Abhängigkeit vom Entfernen oder vom Annähern des Berechtigten, als Träger 14' des Antwortgerätes 13, über das Signal 35 möglich, das im Empfänger 34 nunmehr auch in Abhängigkeit von der demodulierten dopplerabhängigen Empfangsfrequenz modifiziert ist.

Wegen der im Kraftfahrzeug-Bordnetz verfügbaren elektrischen Leistung kann das dort installierte Abfragegerät ständig in Betrieb sein, zumal seine Abstrahlung keine hohe Energiedichte aufweist und keinerlei Information beinhaltet, die von Unbefugten analysiert und unautorisiert verwendet werden könnte, da ja erst die vom mitgenommenen Antwortgerät modulierte Abstrahlung eine individuelle Information enthält. Man kann aber auch vorsehen, das Abfragegerät erst einzuschalten, indem etwa der Griff einer Kraftfahrzeugtür betätigt wird, geschieht das durch den Berechtigten, der das individuell zugeordnete Antwortgerät trägt, dann werden die Freigabe- und Einstellmechanismen aktiviert, andernfalls schaltet das Abfragegerät wieder aus.

Im Rahmen der Erfindung kann auch vorgesehen sein, seitens des Abfragegerätes 12 eine Zeiterfassung zu realisieren, die nach voreingestellter Zeitspanne z.B. im Empfänger 34 oder im Speicher 38 den vorgegebenen Kode (zur Übereinstimmungs-Prüfung mit dem aktuell vom Antwortgerät 13 gelieferten Kode) modifiziert. Dadurch ist sicherstellbar, daß die Autorisierung hinsichtlich Verwendung eines bestimmt kodierten Antwortgerätes 13, z.B. zur Freigabe einer Drehtür in einem Zugangskontrollsystem, nicht unbeschränkt von Antwortgeräten 13 aktualisiert werden kann. So ist z. B. Mißbrauch eines gestohlenen oder gefundenen Kodegerätes 13 überhaupt nur über beschränkte Zeiträume zu befürchten.

**Patentansprüche**

1.  Kommunikationseinrichtung (11) mit von einem Abfragegerät (12) aussendbarem Abfragesignal (16) und von einem Antwortgerät (13) aussendbarem moduliertem Antwortsignal (19),
    dadurch gekennzeichnet,
    daß das Antwortsignal (19) das im Antwortgerät (13) zu Trägerfrequenz-Impulsen zerhackte Abfragesignal (16) selbst ist.

2.  Kommunikationseinrichtung nach Anspruch 1,
    dadurch gekennzeichnet,
    daß das Antwortgerät (13) mit einem umsteuerbaren Pulsmodulator (20) ausgestattet ist.

3.  Kommunikationseinrichtung nach einem der vorangehenden Ansprüche,

dadurch gekennzeichnet,
daß ein getakteter Unterbrecher (21) im Schwingkreis (18) der Antwort-Antenne (17) als Pulsmodulator (20) vorgesehen ist.

4. Kommunikationseinrichtung nach Anspruch 3, dadurch gekennzeichnet,
daß als Stromkreis-Unterbrecher (21) eine Diode (25) vorgesehen ist, die noch nicht von der Amplitude des aufgenommenen Abfragesignales (16) über ihre Dioden-Schwellspannung aussteuerbar ist, wohl aber durch die dieser überlagerte niederfrequentere Amplitude eines Modulations-Oszillators (22).

5. Kommunikationseinrichtung nach einem der vorangehenden Ansprüche, dadurch gekennzeichnet,
daß ein austauschbarer oder nachladbarer Energiespeicher (23) im Antwortgerät (13) vorgesehen ist.

6. Kommunikationseinrichtung nach Anspruch 5, dadurch gekennzeichnet,
daß im Antwortgerät (13) ein aus einer Solarzelle (7) nachladbarer Energiespeicher (23) vorgesehen ist.

7. Kommunikationseinrichtung nach einem der vorangehenden Ansprüche, dadurch gekennzeichnet,
daß das Abfragegerät (12) mit einem schmalbandig der aktuell gegebenen Abfragefrequenz (F) nachgeführten Empfangskanal zur Demodulation des Antwortsignales (19) ausgestattet ist.

8. Kommunikationseinrichtung nach einem der vorangehenden Ansprüche, dadurch gekennzeichnet,
daß das Abfragegerät (12) auf eine Stelleinrichtung (39) arbeitet.

9. Kommunikationseinrichtung nach einem der vorangehenden Ansprüche, dadurch gekennzeichnet,
daß das aufgenommene Antwortsignal (19) in ein annäherungsabhängig modifiziertes Steuersignal (35) für Funktions-Stelleinrichtungen (39) umgewandelt wird.

10. Kommunikationseinrichtung nach einem der vorangehenden Ansprüche, dadurch gekennzeichnet,
daß unterschiedliche Steuerfolgen für Stelleinrichtungen (39) in einem Programmspeicher (38) abgelegt sind, zwischen denen mittels einen aus dem demodulierten Antwortsignale (19) gewonnenen Steuersignales (35) und/oder mittels eines manuell betätigbaren Auswahlschalters (43) bei Zustandekommen der Nachrichtenverbindung (10) eine Auswahl treffbar ist.

11. Kommunikationseinrichtung nach einem der vorangehenden Ansprüche, dadurch gekennzeichnet,
daß mehrere einem Abfragegerät (12) zugeordnete Antwortgeräte (13) sich nur in Teilen ihrer Kennungsinformation vom Antwort-Pulsmodulator (12) unterscheiden.

FIG. 1

FIG.2

EP 0 468 394 A2